# EUROPEAN PATENT SPECIFICATION

(11) **EP 3 741 540 B1**
(45) Date of publication and mention of the grant of the patent: **23.03.2022**
(21) Application number: 20175996.6
(22) Date of filing: 22.05.2020
(51) Int. Cl.: B29C 49/20, B29C 49/04, B29L 23/18

(54) **PRODUCTION METHOD FOR PLASTIC ELEMENTS AND MEMORY SHAPE ALLOY ELEMENTS.**
HERSTELLUNGSVERFAHREN FÜR KUNSTSTOFFELEMENTE UND ELEMENTE AUS FORMGEDÄCHTNISLEGIERUNG.
PROCÉDÉ DE PRODUCTION POUR ÉLÉMENTS EN PLASTIQUE ET ÉLÉMENTS EN ALLIAGE À MÉMOIRE DE FORME.

(30) Priority: 22.05.2019 IT 201900007119
(43) Date of publication of application: 25.11.2020
(73) Proprietor: Iveco S.p.A., 10156 Torino (IT)
(72) Inventor: STEINER, Carlo Blu, 10122 Torino (IT); GAROFALO, Raffaele, 10128 Torino (IT)
(74) Representative: Faraldi, Marco

(56) References cited:
- JP-A- S63 280 613
- US-A- 6 071 370
- US-A- 6 120 100
- US-A1- 2012 068 386
- US-A1- 2014 048 509
- US-B2- 9 616 608

## Description

### TECHNICAL FIELD

The invention relates to a production method, more in particular to a method for the molding of plastic elements and shape-memory material elements.

### KNOWN STATE OF THE ART

Many components used in vehicles, such as for example the intake pipe of an air intake of a vehicle, are made of a plastic material. A known and economic production process used for these plastic elements is called blow-molding, as shown in documents US6071370 A, US6120100 A, US2012068386 A1, US9616608 B2, JPS63280613 A or US2014/048509 A1.

This blow-molding production process basically requires a mold, which is usually provided with two parts, which are configured to cooperate - in contact - with one another and define, on the inside, the shape of the object to the manufactured, and a so-called parison, namely a preformed hollow piece made of a high-temperature thermoplastic material, which will be transformed into the aforesaid object. During the production process, the parison is inserted between the two parts of the mold, which are closed, and then air is introduced into the parison, which, by so doing, is expanded and tends to be squeezed inside the mold parts, thus assuming the shape defined by them. After the expansion, the already formed object needs to cool down and, then, the two parts of the mold are separated and the object can be extracted. This process is also used for the production of objects made of vitreous materials or of metal materials with a small thickness.

The aforesaid objects of the automotive industry can be associated, for different purposes, with shape-memory elements, i.e., for example, alloys that can remember their geometric shape in the space at different temperatures, namely alloys that change their shape in the space assuming specific shapes at specific temperatures that are higher than transition temperatures that can be memorized during the manufacturing process.

This memorization requires a "training" consisting of one (or more) mechanical change in the shape of the aforesaid element relative to a room temperature. For example, at a temperature that is higher than a transition temperature of said alloy, usually the austenitising temperature of the alloy.

This training is carried out in special machines, which require a separate processing and are usually designed for each single use based on the particular type of shapes to be assumed by the shape-memory element.

Hence, in case shape-memory elements on plastic elements have to be used, two very different processing procedures need to be applied, thus prolonging, as a consequence, the overall processing time and increasing costs and dimensions of the relative production chain.

Therefore, times, costs and dimensions of the production chain used to manufacture automotive objects of the aforesaid type need to be reduced.

The object of the invention is to fulfil the needs discussed above.

### SUMMARY OF THE INVENTION

The aforesaid object is reached by a production method according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1A shows a schematic longitudinal section of a molding device according to the invention during an object molding step;
- figure 1B shows a schematic longitudinal section of a molding device according to the invention during a different object molding step;

- figure 2A shows a schematic cross section of the device of figure 1A along line II-II;
- figure 2B shows a schematic cross section of the device of figure 1B along line II-II;
- figure 3 shows the molding device of figures 1A-2A at the end of the aforesaid object molding process; and
- figure 4 shows a longitudinal section of an objected molded by means of the device and the process according to the invention.

### DETAILED DESCRIPTION OF THE INVENTION

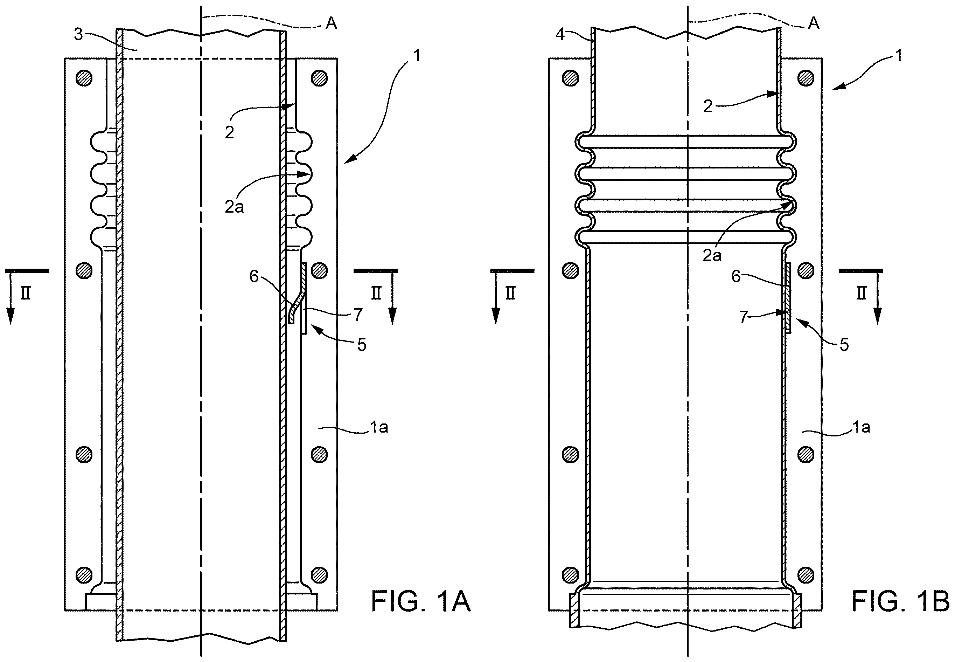

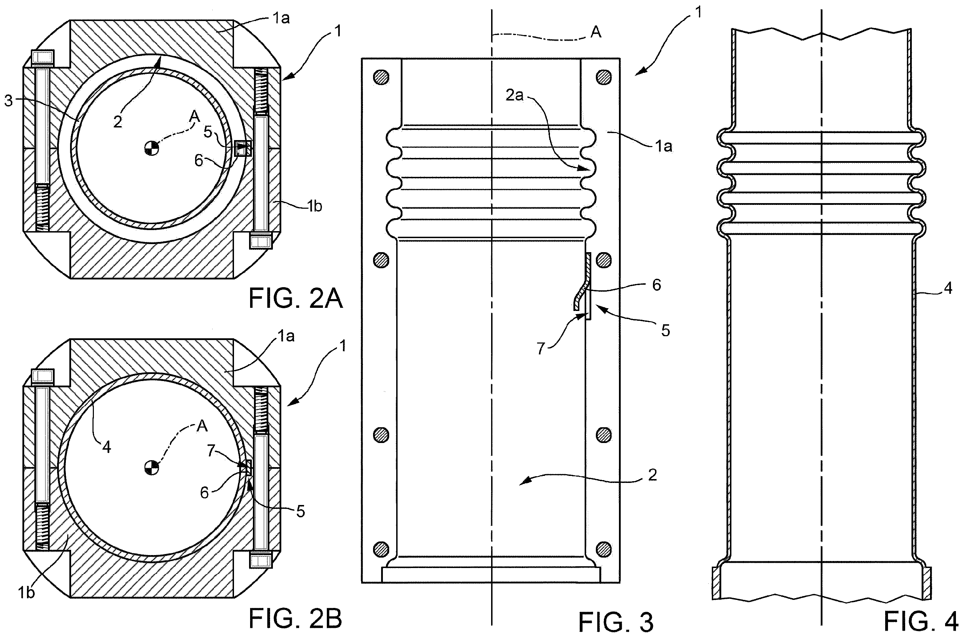

In figures 1A-1B, 2A-2B, number 1 indicates, as a whole, a mold according to the invention.

The mold 1 is hollow and defines a volume 2, which is delimited, on the outside, by an internal surface 2a defining, in turn, a shape that is complementary to the one to be obtained in an objected 4 to be molded through the mold 1. Furthermore, as it is known, the volume 2 has dimensions that are such as to allow for the insertion, on the inside, of a parison 3, namely a high-temperature plastic material preform, which is configured to expand, through blowing, until it coincides with the defined inner surface 2a, so as to form the aforesaid object 4.

In the embodiment described herein, the object 4 to be manufactured is a pipe with a substantially cylindrical shape and, as a consequence, both the opening 2 and the parison 3 have a substantially cylindrical shape and develop along a longitudinal axis A of the mold 1.

The mold 1 will obviously comprise known blowing means, which are not shown herein and are configured to introduce air into the parison 2, as well as moving means for the latter.

According to the embodiment shown herein, furthermore, the mold 1 advantageously comprises, according to figures 2A-2B, a first portion 1a and a second portion 1b, which preferably are symmetrical relative to a longitudinal plane of the mold 1. As it is known, at least one of the two portions 1a, 1b of the mold 1 is moved by actuator means, for example hydraulic actuator means that are not shown herein, so as to assume a first position, in which the two portions are in contact with one another and define the opening 2, and a second position, in which they are apart from one another and allow a molded piece to be pulled out.

Furthermore, a person skilled in the art clearly understands that figures 1A, 1B and 2A-2B are schematic views and that the two portions 1a, 1b, when connected to one another, squeeze the parison 3 in such a way that the compressed air blown on the inside expands it along the surface 2a, as it is known.

The mold 1 comprises a housing 5, which is configured to allow a shape-memory alloy element 6 to be fixed. Advantageously, at least one of the two portions 1a, 1b of the mold 1 comprises said housing 5 and, in the embodiment described herein, said housing 5 basically comprises a seat 7, which is obtained in the inner surface 2a, is open towards the volume 2 and accommodates an end part of the element 6. More in detail, said seat 7 is symmetrical relative to the longitudinal plane of mold 1 and, hence, half in the first portion 1a and half in the second portion 1b.

According to figures 1A and 2A, the element 6 has a shape, at room temperature, which extends inside the volume 2, without being in contact, when it is inserted, with the parison 3.

The mold 1 works as follows. In a step of the production process (figures 1A and 2A), the parison 3 is inserted into the volume 2, as is the shape-memory alloy element 6, which extends inside the volume 2 according to a first predetermined geometric shape.

In a further step of the production process (figures 1B and 2B), compressed air is let into the parison 3 and the mold 1 is closed. Hence, the parison 3 tends to adjust to the shape of the surface 2a of the volume 2 and, by so doing, squeezes the element 6, which tends to assume a second shape, thus adjusting itself to the shape of the surface 2a.

The parison 3 is inserted at a temperature that is higher than, or at least equal to, the transition temperature of the material of the shape-memory alloy element 6, so that, when it is compressed and heated by the parison 3 to (or above) said temperature, it memorizes the second geometric shape defined by the compression between the parison 3 and the surface 2a.

A person skilled in the art obviously knows that it is possible to choose the density of the plastic material of the parison 3 and that the mechanical features (section, rigidity) of the element 6 are such that the parison 3, during its expansion, can exert a compression force upon the element 6, though without flaking off.

In a final step of the process (figures 3, 4), the mold 1 simply needs to be opened so as to pull out both the molded object 4 and the element 6.

Therefore, the invention relates to an integrated production method to manufacture a polymer material element and a shape-memory alloy element comprising the following steps:
- placing a shape-memory alloy element 6 inside the volume 2 defined by the mold 1, said element 6 defining a first geometric operating shape inside the volume 2;
- placing the parison 3 in the volume 2, the former having a temperature that is equal to or higher than the transition temperature of the element 6,
- blowing air into the parison in order to expand it until it adheres to the inner surface 2a of the volume 2, thus forming the object 4 defined by the shape of the inner surface 2a, hence compressing the element 6 in a second operating shape;
- maintaining this configuration until cooling to a temperature that is lower than the aforesaid transition temperature; and
- removing the object 4 and the element 6 from the mold.

Preferably, said cooling temperature is the room temperature; advantageously, the shape-memory material is a metal alloy, consequently the transformation temperature is an austenitising temperature of said alloy.

Owing to the above, the advantages of the integrated molding device and the relative production method according to the invention are evident.

Thanks to the integrated molding device and to the relative production method, it is possible to manufacture a plastic/polymer material object 4 and, at the same time, memorize different geometric operating shapes of a shape-memory alloy element 6.

By so doing, less operations need to be carried out along the assembly line and the space as well as the operation of dedicated machines for the processing of the element 6 are no longer needed; in this way, manufacturing costs and times are reduced.

Furthermore, the fact that the housing 5 is arranged between two portions defined by the mold 1 allows the element 6 to be easily removed at the end of the production process.

Finally, the integrated molding device and the relative production method according to the invention can be subjected to changes and variants, which, though, do not go beyond the scope of protection set forth in the appended claims.

For example, it is clear that the shape and the type of the mold 1 can be different, just like the materials of the object 4 and of the element 6 can be of any type.

Moreover, it is clear that the production method suggested herein can comprise further features that are not described herein for the sake of brevity and because they are obvious.

## Claims

1. An integrated production method of an element (4) made of plastic material and an element (6) made of memory shape alloy, said method comprising the steps of:
• positioning a memory shape alloy element (6) inside a volume (2) defined by a mold (1), said element (6) defining, at room temperature, a first geometric shape operating inside said volume (2);
• positioning a parison (3) in said volume (2), said parison (3) being the same temperature as at least a material transformation temperature of said element (6)
• blowing air inside said parison (3) to expand it until it adheres to an internal surface (2a) of said volume (2), thus compressing said element (6) into a second operating geometric shape;
• maintaining the previous configuration until reaching a temperature that is lower than at least said transformation temperature of said material; and
• extracting said element (6) from said mold (1) and an object (4) blown from said parison (3) against said surface (2a).

2. - The production method according to claim 1, wherein said memory shape alloy material is a metal alloy and said transformation temperature is an austenitising temperature of said alloy.

3. - The production method according to claim 1 or 2, wherein said cooling temperature is the environmental temperature.

4. A use of a production device to obtain an element (4) made of a plastic material and an element (6) made of a memory shape alloy material and integrated in said element (4), said production device comprising a mold (1) defining a volume (2) delimited by an internal surface (2a) of said mold (1), said mold (1) comprising a housing (5) configured to house an element (6) made of memory shape material, said element (6) assuming a first geometric shape which extends inside said volume (2) in an operating phase of said production for blow-molding and assuming a second geometric shape adhering to said internal surface (2a) in a further operating phase of said production by molding, said second geometric shape being forced by said object made of plastic material when expanded inside said volume (2).

## Patentansprüche

1. Integriertes Herstellungsverfahren für ein Element (4) aus einem Kunststoffmaterial und ein Element (6) aus einer Formgedächtnislegierung, welches Verfahren die folgenden Schritte umfasst:
- Positionierung eines Formgedächtnislegierungselements (6) innerhalb eines Volumens (2), welches durch eine Form (1) begrenzt wird, welches Element (6) bei Zimmertemperatur eine erste geometrische Form innerhalb des Volumens (2) begrenzt;
- Positionierung eines Blasrohlings (3) in dem Volumen (2), welcher Blasrohling (3) die gleiche Temperatur hat wie zumindest eine Materialumwandlungstemperatur des Elements (6),
- Blasen von Luft in den Blasrohling (3), um diesen auszudehnen, bis er sich an eine Innenfläche (2a) des Volumens (2) anschmiegt, wodurch das Element (6) in eine zweite geometrische Form gedrückt wird;
- Erhalten der vorhergehenden Anordnung, bis eine Temperatur erreicht wird, die niedriger ist als zumindest die Materialumwandlungstemperatur; und
- Herausziehen des Elements (6) aus der Form (1) und eines Objekts (4), das durch den Blasrohling (3) gegen die Fläche (2a) geblasen worden ist.

2. Herstellungsverfahren gemäß Anspruch 1, bei welchem das Material der Formgedächtnislegierung eine Metalllegierung ist und die Umwandlungstemperatur eine Austenitisierungstemperatur der Legierung ist.

3. Herstellungsverfahren gemäß Anspruch 1 oder 2, bei welchem die Abkühltemperatur die Umgebungstemperatur ist.

4. Anwendung einer Herstellungsvorrichtung zur Herstellung eines Elements (4) aus einem Kunststoffmaterial und eines Elements (6) aus einem Formgedächtnislegierungsmaterial, welches in das Element (4) integriert ist, welche Herstellungsvorrichtung eine Form umfasst, die ein Volumen (2) begrenzt, das durch eine Innenfläche (2a) der Form (1) begrenzt wird, welche Form (1) ein Gehäuse (5) umfasst, ausgebildet zur Aufnahme eines Elements (6) aus einem Formgedächtnismaterial, welches Element (6) eine erste geometrische Form annimmt, welche sich in das Volumen (2) in einer Durchführungsphase der Herstellung durch Blasformen erstreckt, und eine zweite geometrische Form annimmt, in welcher es an der Innenfläche (2a) in einer weiteren Durchführungsphase der Herstellung durch Formen anhaftet, wobei die zweite geometrische Form zwangsweise durch das Objekt aus dem Kunststoffmaterial vorgegeben wird, wenn es innerhalb des Volumens (2) ausgedehnt wird.

## Revendications

1. Procédé de production intégrée d'un élément (4) réalisé à partir de matière plastique et d'un élément (6) réalisé à partir d'un alliage à mémoire de forme, ledit procédé comprenant les étapes suivantes :
positionner un élément (6) en alliage à mémoire de forme à l'intérieur d'un volume (2) défini par un moule (1), ledit élément (6) définissant, à température ambiante, une première forme géométrique opérationnelle à l'intérieur dudit volume (2) ;
positionner une paraison (3) dans ledit volume (2), ladite paraison (3) étant à la même température qu'au moins une température de transformation de matériau dudit élément (6),
souffler de l'air à l'intérieur de ladite paraison (3) pour lui faire subir une expansion jusqu'à ce qu'elle adhère à une surface interne (2a) dudit volume (2), comprimant ainsi ledit élément (6) dans une seconde forme géométrique opérationnelle ;
maintenir la configuration précédente jusqu'à atteindre une température qui est inférieure au moins à ladite température de transformation dudit matériau ; et
extraire ledit élément (6) dudit moule (1) et un objet (4) soufflé à partir de ladite paraison (3) contre ladite surface (2a).

2. Procédé de production selon la revendication 1, dans lequel ledit matériau en alliage à mémoire de forme est un alliage métallique et ladite température de transformation est une température d'austénitisation dudit alliage.

3. Procédé de production selon la revendication 1 ou 2, dans lequel ladite température de refroidissement est la température environnementale.

4. Utilisation d'un dispositif de production pour obtenir un élément (4) réalisé avec une matière plastique et un élément (6) réalisé avec un matériau en alliage à mémoire de forme et intégré dans ledit élément (4), ledit dispositif de production comprenant un moule (1) définissant un volume (2) délimité par une surface interne (2a) dudit moule (1), ledit moule (1) comprenant un logement (5) configuré pour loger un élément (6) réalisé avec un matériau en alliage à mémoire de forme, ledit élément (6) adoptant une première forme géométrique qui s'étend à l'intérieur dudit volume (2) dans une phase opérationnelle de ladite production pour mouler par soufflage et adopter une seconde forme géométrique adhérant à ladite surface interne (2a) dans une autre phase opérationnelle de ladite production par moulage, ladite seconde forme géométrique étant forcée par ledit objet réalisé en matière plastique lorsqu'il subit l'expansion à l'intérieur dudit volume (2).
